(19) Europäisches Patentamt / European Patent Office / Office européen des brevets

(11) **EP 4 586 157 A1**

(12) **EUROPEAN PATENT APPLICATION**

(43) Date of publication:
**16.07.2025 Bulletin 2025/29**

(21) Application number: **24196415.4**

(22) Date of filing: **26.08.2024**

(51) International Patent Classification (IPC):
**G06N 20/10** $^{(2019.01)}$    **G06N 3/09** $^{(2023.01)}$
**G06N 3/0499** $^{(2023.01)}$    G06N 3/084 $^{(2023.01)}$

(52) Cooperative Patent Classification (CPC):
**G06N 20/10; G06N 3/0499; G06N 3/09;**
G06N 3/084

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.01.2024 EP 24150954**

(71) Applicant: **Continental Automotive Technologies GmbH**
**30175 Hannover (DE)**

(72) Inventors:
- **Schlauch, Christian**
  **30175 Hannover (DE)**
- **Dr. Wirth, Christian**
  **30175 Hannover (DE)**

(74) Representative: **Continental Corporation**
**c/o Continental Automotive Technologies GmbH**
**Intellectual Property**
**Putzbrunnerstr. 69**
**81739 München (DE)**

(54) **APPARATUS, COMPUTER-READABLE DATA CARRIER, COMPUTER PROGRAM, AND CONTINUAL LEARNING METHOD**

(57)    The present disclosure relates to an apparatus, a computer-readable data carrier, a computer program, and a continual learning (CL) method. In particular, the present disclosure relates to a concept for training a machine-learning based model including a neural network and a last-layer kernel approximation. The method comprises obtaining a kernel matrix including uncertainty information for the last-layer kernel approximation and adapting the kernel matrix based on the uncertainty information using regularization-based continual learning.

100

```
┌─────────────────────────────────────────────────┐
│ Obtaining a kernel matrix including uncertainty  │ ── 110
│ information for the last-layer kernel            │
│ approximation                                    │
└─────────────────────────────────────────────────┘
                        │
                        ▼
┌─────────────────────────────────────────────────┐
│ Adapting the kernel matrix based on the          │ ── 120
│ uncertainty information using regularization-    │
│ based continual learning                         │
└─────────────────────────────────────────────────┘
```

Fig. 1

EP 4 586 157 A1

**Description**

The present disclosure relates to an apparatus, a computer-readable data carrier, a computer program, and a continual learning (CL) method. In particular, the present disclosure relates to a concept for training a machine-learning based model including a neural network and a last-layer kernel approximation.

Machine-learning based models may be applied in various fields of science and technology. Applications of machine-learning based models (also referred to herein as "models" or, singular, "model"), e.g., include automotive and robotic applications. In particular, machine-learning based models may be applied for autonomous or assisted driving. For example, such models may be applied for trajectory prediction.

Trajectory prediction in autonomous driving is essential to enable safe motion planning for ego-vehicles. Concepts for trajectory prediction are based on data-driven deep learning models that give probabilistic and multi-modal predictions. Put simply, such models learn / are trained to predict a likelihood of multiple possible trajectories for any traffic participant based on a set of past observations.

This comes along with various challenges including the following:

1. Machine-learning-based models (e.g., deep learning models) may be ill-calibrated. In practice, they, e.g., tend to be over- and/or underconfident in their predictions. This is a particular problem whenever probabilistic and multi-modal predictions are desired. Some concepts relating to Bayesian deep learning propose different model adaptations to enable uncertainty estimates and better calibrated predictions. Popular model adaptations include for example MC (Monte Carlo)-Dropout, Laplace-Approximation, Bayesian Deep Ensembles and Variational-Inference.

2. When new observations become available, motion forecasting/trajectory prediction models are usually completely re-trained. Some approaches also incorporate synthetic samples that are generated from data augmentations, simulations or from semantic maps using prior knowledge. Continual learning methods can be used to avoid completely re-training by sequentially updating or re-using models, therefor alleviating compute- and memory costs and controlling the information trade-off between different sets of observed and synthetic samples. A subset of continual learning methods are based on regularization, such as EWC (Elastic Weight Consolidation) and VCL (Variational Continual Learning). These regularization-based continual learning methods are naturally suited for Bayesian deep learning adaptations since they can exploit uncertainty information in the parameter space. Additionally, they do not require a costly expanding parameter set, a rehearsal sample-memory or pseudo-rehearsal generative model. Meaning, they can be employed without model changes or dealing with changes to training data.

Bayesian deep learning adaptations such as MC-Dropout, Laplace-Approximation, Bayesian Deep Ensembles or Variational-Inference are computationally intensive since they require multiple forward passes to estimate the uncertainty and calibrate the predictions.

Hence, there is a demand for an improved concept for continual learning, in particular, for a concept of regularization-based continual learning for last-layer kernel models.

This demand may be satisfied by the subject-matter of the appended independent patent claims. Exemplary embodiments are disclosed by the appended dependent claims.

Embodiments of the present disclosure are based on the finding that last-layer kernel approximations such as, e.g., SNGP (Spectral-Normalized-Gaussian-Process) and Deterministic Uncertainty Estimation (DUE), are more compute-efficient than Bayesian deep learning adaptations since they only require a single forward pass. Last-layer kernel approximations include a neural network, e.g., as feature projector and a non-parametric kernel method, such as a Gaussian Process with radial basis function kernel, as prediction head.

Last-layer kernel approximation may be not only more efficient but can also provide increased sensitivity to outliers and robustness to adversarial attacks due the distance-sensitive nature of employed kernel methods. However, existing regularization-based continual learning methods such as EWC and VCL are not directly applicable to these models because they assume a parametric form of the whole model. Existing tailor-made continual methods are FRCL (Functional Regularization for Continual Learning) and KCL (Kernel Continual Learning). However, such methods require a rehearsal sample-memory for distilled (pseudo)-data points and are, thus, not (purely) regularization-based. Also, they may require parameter expansion. Rehearsal is likely to be sensitive to the data imbalances [1] in our application, while parameter expansions require architecture changes which introduce additional complexity. Furthermore, FRCL and KCL are not directly applicable to last-layer kernel approximations, as they are not considering projection layers (e.g., for projecting a high-dimensional input to a lower-dimensional space) that lead up to these kernels. The present disclosure relates to a solution enabling continual learning in connection with last-layer kernel models.

Embodiments of the present disclosure provide a continual learning method for training a machine-learning based model including a neural network and last-layer kernel approximation. The method comprises obtaining a kernel matrix including uncertainty information for the last-layer kernel approximation and adapting the kernel matrix based on the uncertainty information using regularization-based continual learning.

This allows continual learning in machine-learning-based models featuring or including last-layer kernel approximation, thereby combining the above-mentioned advantages of last-layer approximations and continual learning techniques.

A skilled person having benefit from the present disclosure will appreciate that the proposed concept for continual learning particularly allows for continual learning of different tasks. In automotive applications, the different tasks, e.g., include different tasks for maneuvering a vehicle. Additionally, or alternatively, different training data may be used for learning the different tasks.

In some embodiments, the machine-learning based model is trained for a first task based on prior knowledge, and adapting the kernel matrix comprises training the model for a second task based on one or more observations using regularization-based continual learning.

In this way, the machine-learning based model may be trained effectively.

In practice, the first task may be to determine one or more trajectories for an agent within a drivable area, and the second task may be to select, from the trajectories, a trajectory which is closest to an observed trajectory.

The skilled person will also appreciate that continual learning may be not only applied to the last-layer approximation but also to the neural network.

Accordingly, the method may further comprise training the neural network using regularization-based continual learning and applying different temperature parameters for a different regularization strength for the neural network and the last-layer kernel approximation.

The proposed concept, e.g., may be applied for any computer vision task or other tasks for machine-learning based models. So, the machine-learning based model, e.g., configured for a computer vision task.

In particular, the machine-learning based model may be configured for trajectory prediction, classification, semantic segmentation, and/or object detection.

Further embodiments of the present disclosure provide a machine-learning based model obtainable by the proposed method.

Still further embodiments provide a computer program comprising instructions which, when the computer program is executed by a computer, cause the computer to execute the proposed method and/or execute the proposed machine-learning based model.

Further embodiments provide a computer-readable data carrier having stored thereon the proposed computer program.

Also, embodiments may provide an apparatus comprising one or more interfaces for communication and a data processing circuit configured to execute the proposed method and/or the proposed machine-learning based model.

Further, embodiments are now described with reference to the attached drawings. It should be noted that the embodiments illustrated by the referenced drawings show merely optional embodiments as an example and that the scope of the present disclosure is by no means limited to the embodiments presented:

Brief description of the drawings

Fig. 1 shows a flow chart schematically illustrating an embodiment of a method for training a machine-learning based model including a neural network and last-layer kernel approximation;

Fig. 2 shows a block diagram schematically illustrating an application of the proposed concept for continual learning of different tasks; and

Fig. 3 shows a block diagram schematically illustrating an apparatus according to the proposed approach.

Deep learning (DL) has become a powerful artificial intelligence (AI) tool for handling complex tasks. However, DL requires extensive training data to provide robust results. High acquisition costs can render the collection of sufficient data unfeasible. This is especially problematic in safety-critical domains like autonomous driving, where one may encounter a wide range of edge cases associated with high risks. Informed learning (IL) aims to improve the data efficiency and robustness of DL models by integrating prior knowledge. Most IL approaches consider prior scientific knowledge, for example the physics of motion, by constraining or verifying the problem space or learning process directly. However, hard constraints are not suitable for qualitative prior expert knowledge where ubiquitous exceptions exist. In autonomous driving, for example, traffic participants are expected to comply with speed regulations but must not rule out violations. Still, prior knowledge about norms and regulations, like in this example, are highly informative for most cases and readily available at low cost.

A recent idea is the integration of such prior (expert) knowledge into probabilistic DL models. These models maintain a distribution over possible model parameters instead of single maximum likelihood estimates. The prior knowledge can be represented as a prior parameter distribution, learned from arbitrarily defined knowledge tasks, to regularize training on real-world observations. Probabilistic informed learning (PIL) approaches apply this idea to trajectory prediction in autonomous driving using regularization-based continual learning methods, achieving a substantially improved data efficiency. However, typical sampling-based probabilistic DL model approximations, such as the variational inference (VI), are computationally expensive, since they require multiple forward passes and substantially more training epochs.

A promising alternative are compute-efficient last layer approximations. The spectral normalized Gaussian process (SNGP), for example, is a particularly efficient approximation, that applies a Gaussian process (GP) as last layer to a deep neural network (DNN). The DNN acts as scalable feature extractor, while the last layer GP allows a deterministic estimation of the uncertainty in a single forward pass. The last layer GP kernel itself is approximated via a finite number of Fourier features, which is easy to scale and asymptotically exact. The present disclosure suggests a regularization-based continual learning method which particularly enables the use of SNGPs in a PIL approach. The proposed approach imposes little computational overhead and, in some embodiments, requires no additional architecture changes, which makes it applicable in a broad range of application domains.

So, the proposed approach may be particularly, but not exclusively, applied in a PIL approach. In particular, but not exclusively, the proposed approach may be applied in automotive applications, e.g., for autonomous driving. In practice, the proposed approach may be applied for trajectory prediction in autonomous driving, which is an especially challenging application since well-calibrated, multi-modal predictions are required to enable safe planning.

So, the proposed approach provides a regularization-based continual learning method to compute efficient SNGPs and enable their use in a PIL approach. In some embodiments, the proposed approach may be applied for trajectory prediction in autonomous driving and for integrating prior drivability knowledge into a machine-learning-based model, e.g., CoverNet-SNGP, as laid out in more detail later with reference to the appended drawings.

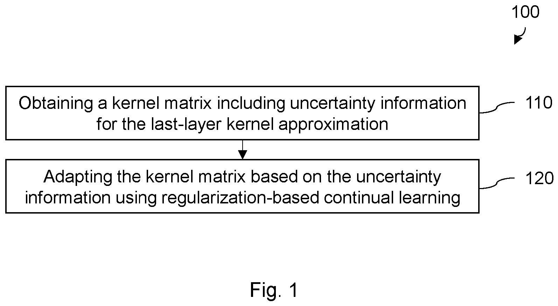

Fig. 1 shows a flow chart schematically illustrating an embodiment of a method 100 for training a machine-learning based model including a neural network and last-layer kernel approximation.

In context of the present disclosure, last-layer kernel approximation can be understood as a technique used to make predictions with neural networks more efficient. Instead of using the entire neural network during inference, this approach focuses on the last layer. It approximates the predictions by treating the final layer's activations as features and applying kernel methods to them.

A key idea is to compute a kernel matrix based on an output of the penultimate layer (the layer before the last). This kernel matrix captures the similarities between data points in the transformed feature space. By leveraging the kernel trick, complex non-linear relationships can be captured without explicitly computing them. It is noted that the proposed approach, even though it may be explained in connection with specific embodiments of last-layer kernel approximations, may be applied for different examples of last-layer kernel approximations. In particular, the proposed approach may be applied for different kernels.

In context of the present disclosure, neural networks can be understood as computational models comprising interconnected layers of nodes (so-called "neurons") that process data. They are configured to recognize patterns through training and adjusting weights based on errors. Examples of neural networks include Feedforward Neural Networks (FNN), Convolutional Neural Networks (CNN), Transformers, and Recurrent Neural Networks (RNN). It is noted that the proposed approach may be applied for different (artificial) neural networks.

The method 100 comprises obtaining 110 a kernel matrix including uncertainty information for the last-layer kernel approximation. In practice, the uncertainty information includes (information on) variance/s and covariance/s of input data points process by the machine-learning-based model.

In practice, e.g., a kernel function is applied to pairs of input data points to compute pairwise similarities (variance/s and covariance/s) between the data points. The computed similarities are, then, arranged in a matrix including entries indicative of kernel function values for the pairs of input data points.

A skilled person having benefit from the present disclosure understands that when a value of the kernel function applied to data points is high, it indicates that these points are close to each other in the feature space. This closeness suggests that the model is confident about their relationship or similarity, implying low uncertainty. The model has a clear understanding of how these points relate to one another. Conversely, a low kernel function value indicates that the data points are far apart in the feature space. This distance suggests higher uncertainty, as the model is less confident about their relationship. The model finds it challenging to relate these points, indicating greater ambiguity in their interaction or classification.

So, the uncertainty information indicates how confidently the machine-learning-based model distinguishes or relates different input data points in the transformed feature space/latent space.

The method 100 suggests adapting 120 the kernel matrix based on the uncertainty information using regularization-based continual learning.

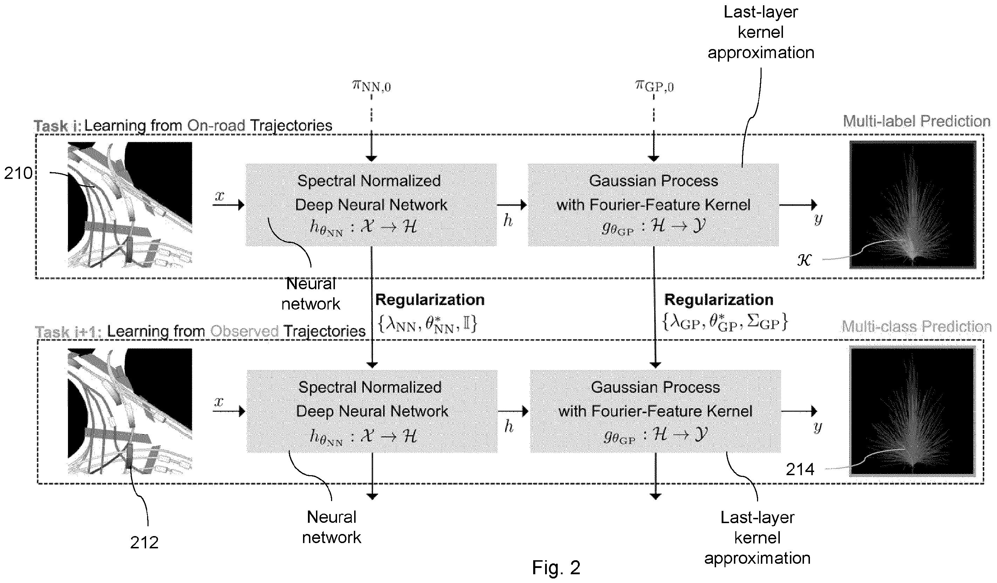

Continual learning, also known as "lifelong learning", is a machine learning paradigm where a model is designed to continuously learn and adapt from a stream of data over time, rather than being trained on a fixed dataset. For regularization-based continual learning, a regularization term is included into a loss function for the continual learning to protect "important" model parameters from significant changes during the continual learning of new tasks. According to the proposed approach, the regularization term may be regularized by the uncertainty information. So, the regularization (term), e.g., is (inversely) correlated with the uncertainty (information). In this way, more uncertain parameters of the last-layer kernel approximation may be modified more strongly than less uncertain parameters. In other words, more uncertain parameters are regularized more strongly than less uncertain parameters, as laid out in more detail below with reference to Fig. 2.

Fig. 2 shows a block diagram schematically illustrating an application of the proposed concept for continual learning of different tasks. It is noted, that for the sake of simplicity, the proposed approach is explained with reference to an example of one continual learning technique. However, it should be noted that the proposed approach may be not only applied in connection with the described example that also with other embodiments of continual learning.

In the example of Fig. 2, the proposed approach, e.g., is applied in connection with probabilistic informed learning (PIL).

$$D_i = \left\{ \left( x_j^{(i)}, y_j^{(t)} \right) \right\}_{j=1}^{n_j}$$

The basic idea is to define a sequence of knowledge tasks $i = 1, ..., M - 1$ on data that with $n_i$ samples each. Those data sets may be synthetically generated, for example, by leveraging semantic annotations to map the prior knowledge to a prediction target. In practice, the semantic annotations may be already included in one or some of the data sets.

In practice, one can use prior knowledge to obtain $y_i$ from $x_i$, e.g. some rule-of-thumb knowledge or other soft-constraints that allow to generate a set of possible $y_i$, that may include the (unobserved), true $y_i$. This may be related to the fact, that one may only expect soft constraints. In autonomous driving, $x_i$, e.g., contains road map data, including stop lines and one can then deduce $y_i$ from the (prior) knowledge that vehicles generally should not go over a stop line (prediction target). So, in other words, the prior knowledge may include knowledge about typical or human driving behavior and/or traffic rules.

In particular, the machine-learning based model, e.g. a deep learning (DL) model for probabilistic learning (also referred to herein as "probabilistic deep learning model") may be trained for a first task based on prior knowledge.

So, given a probabilistic DL model parameterized by $\theta$ and an initial and informative prior $\pi_0(\theta)$, a goal is to recursively learn from the sequence of tasks. For this Bayes' rule may be applied as follows:

$$p(\theta|D_{1:i}) \propto \pi_0(\theta) \prod_{j=1}^{i} p_\theta(y_j|x_j),$$

Where $p_\theta(y_j|x_j)$ are likelihood functions (including, e.g., variances/covariances between $\theta$) at task $j$, which are assumed to be conditionally independent given $\theta$. The informative priors make information explicit and shape a loss surface in the downstream task, improving a training outcome. The computationally intractable recursion may be approximated by re-purposing regularization-based continual learning methods.

The PIL approach can generally be applied, as long as first, the prior knowledge is strongly related to the observational task, second, the prior knowledge can be mapped to the prediction target and third, the posterior parameter distribution can be estimated.

In a first task $i$, the model may be trained based on prior knowledge, e.g., based on predefined task-related assumptions and/or constraints. Later, the model may be trained for a second task $i + 1$ based on one or more observations using regularization-based continual learning. For trajectory prediction, the first task $i$, e.g., is to determine one or more trajectories for an agent within a drivable area and the second task $i + 1$ is to select, from the trajectories, a trajectory which is closest to an observed trajectory (see Fig. 2).

As indicated by Fig. 2, the machine-learning-based model may correspond to or comprise a spectral normalized Gaussian process (SNGP). As indicated by Fig. 2, the SNGP may include a composition $f_\theta = g_{\theta_{GP}} \circ h_{\theta_{GP}}: X \to Y$, $\theta = \{\theta_{NN}, \theta_{GP}\}$. The SNGP includes a feature extractor, e.g., a deterministic, spectral normalized feature extractor $h_{\theta_{NN}}: X \to \mathcal{H}$ with trainable parameters $\theta_{NN}$ mapping a high dimensional input space X into a lower dimensional hidden space $\mathcal{H}$. Also, the SNGP includes a GP output layer $g_{\theta_{GP}}: \mathcal{H} \to Y$. The GP output layer may include a radial basis function (RBF) kernel mapping into the output space $Y$. The RBF kernel can be approximated by a finite number of (random) Fourier features using Bochner's Theorem. This reduces the GP to a Bayesian linear model that can be understood as a neural network layout with fixed hidden weights and trainable output weight parameters $\theta_{GP}$. This enables end-to-end training together with the feature extractor. The distance-sensitivity of the SNGP, due to the spectral normalization and RBF kernel, prevents a "feature-collapse", which improves the robustness against adversarial and outlier samples. It should be noted that the proposed approach does not require a spectral normalization of the feature extractor and that also other feature extractors may be applied.

The proposed approach suggests multiple additional hypo parameters, namely an upper bound $s$ and number of power iterations $N_p$ for the spectral normalization for the feature extractor as well as the number of Fourier features $N_{GP}$, the kernel's length scale $l_s$ and Gaussian prior choice for the output weights $\theta_{GP}$.

The spectral normalization tries to bound a Lipschitz constant of the mapping from $x_i$ to $y_i$ (a real-numbered Lipschitz constant means that $y_i$ changes proportionally to changes in $x_i$. Accordingly, if it is unbounded, $y_i$ might not change at all or in other unforeseeable ways. The spectral normalization, therefore, (by default) may be lower bounded by 0. So, the upper bound $s$ serves as an upper bound to define a range for the Lipschitz constant. The spectral normalization, e.g., includes a singular value decomposition (looking for the biggest singular values of the layer wise parameter matrices) which involves the inversion of layer-wise parameter matrices. That has O(n^3) complexity but one can approximate it with a power iteration method that converges (the more iterations the better the approximation).

There are two problems prohibiting the direct application of the PIL approach to composite last layer kernel approximations like the SNGP. First, there is no existing continual learning method for kernels that does not require rehearsal memories or parameter expansions (see above). Second, estimating the posterior parameter distribution of the feature extractor (e.g., via a Laplace approximation or variational inference) contradicts the motivation for the last layer kernel approximation regarding compute-efficiency.

Embodiments of the present disclosure tackle the first problem by leveraging the Fourier feature approximation of the RBF kernel of the GP. The posterior distributions of the parameters of the last layer at task $i$ can be made tractable through Laplace approximation. For this, it is assumed:

$$p(\theta_{GP}|D_{1:i}) \approx \mathcal{N}\big(\theta_{GP}; \theta_{GP,i}^*, \Sigma_{GP,i}^{-1}\big),$$

given a maximum a posteriori (MAP) estimate $\theta_{GP,i}^*$ at task $i$. Similar to online EWC, $\theta_{GP,i}^*$ can be obtained by minimizing

$$-\log p_{\theta_{GP}}(y_i|x_i) - \frac{\lambda_{GP}}{2}\big(\theta_{GP} - \theta_{GP,i-1}^*\big)^T \Sigma_{GP,i-1}^{-1}\big(\theta_{GP} - \theta_{GP,i-1}^*\big)$$

with respect to $\theta_{GP}$, where the precision (uncertainty information) $\Sigma_{GP,i-1}^{-1}$ as approximated by the sum of the Hessian at the MAP estimate and a scaled precision at task $i$ - 1, that is,

$$\Sigma_{GP,i}^{-1} \approx H_{GP,i}\big(\theta_{GP,i}^*\big) + \gamma_{GP}\Sigma_{GP,i-1}^{-1}.$$

Above, $\lambda_{GP} > 0$ is a temperature parameter that scales the importance of the previous task, and $0 < \gamma_{GP} \leq 1$ is a decay parameter that allows for more plasticity over very long task sequences. In contrast to online EWC, the proposed approach allows to cheaply compute the Hessian using moving averages instead of using a Fisher matrix approximation.

To tackle the second problem and regularize the feature extractor, it is proposed to approximate the precision $\Sigma_{NN,i-1}^{-1}$ with the identity matrix $I$. So, the neural network may be also trained using regularization-based continual learning. For the regularization, a $\mathcal{L}$ 2-regularization may be applied. The $\mathcal{L}$ 2-regularization for the MAP estimates may be obtained by minimizing

$$-\log p_{\theta_{NN}}(y_i|x_i) - \frac{\lambda_{NN}}{2}\big(\theta_{NN} - \theta_{NN,i-1}^*\big)^2$$

with respect to, i.e., by adapting, $\theta_{NN}$ (trainable parameters of the neural network/feature extractor), where $\lambda_{NN}$, an optional specific temperature parameter for controlling a regularization strength for the neural network/feature extractor, is applied. This idea is particularly suitable for closely related tasks, i.e., related to a similar or the same superordinate goal (e.g., trajectory planning).

In practice, different temperature parameters may be applied for the neural network and the last-layer kernel approximation for a different regularization strength for the neural network and the last-layer kernel approximation.

In the task $i = 1$, one can use an uninformative zero-mean unit-variance prior $\pi_{GP,0}$ for the GP layer (last-layer kernel approximation) and $\pi_{NN,0}$ for the feature extractor/neural network, which amounts to a simple $\mathcal{L}$2-regularization in both cases where the trainable parameters of the neural network and the last-layer kernel approximation are a prior independent and equally important

In result, the complete model $f_\theta: X \rightarrow Y$, parameterized by $\theta = \{\theta_{NN}, \theta_{GP}\}$, can be effectively regularized and, e.g., used in a probabilistic informed learning approach, as visualized in Fig. 2. As can be seen, and some embodiments of the proposed method, hyperparameters such as $\{\lambda_{NN}, \lambda_{GP}, \gamma_{GP}\}$ may be introduced. It only requires the parameters $\theta$ of a previous task and has little computational overhead like online EWC.

For simplicity, the proposed concept should be described in more detail for the so-called "single-agent trajectory prediction problem" where trajectories for only one single agent 212 are predicted. However, it should be noted that the proposed concept, in practice, also may be applied to other tasks, particularly, for predicting trajectories for multiple agents.

For the single-agent trajectory prediction, an autonomous driving system is assumed to observe states in the state space $Y$ of multiple or all agents $\mathcal{A}$ present in a scene 210 on the road (see example of Fig. 2). Let $y^{(t)} \in Y$ denote the state of a target agent $a \in \mathcal{A}$, e.g., agent 212, at time $t$ and let $y^{(t-T_0:t)} = (y^{(t-T_0)}, y^{(t-T_0+\delta t)}, \dots, y^{(t)})$ be its observed trajectory over an observation duration/history $T_0$ with sampling period $\delta t$.

As mentioned above, the first task may aim at determining trajectories within a drivable area. For this, one or more maps $\mathcal{M}$ (e.g., of the (traffic) scene 210) including (semantic) annotations indicating a drivable area and/or a non-drivable area may be used. In practice, the maps may be agent-centered such that they may be directly applied for trajectory prediction for the agent. Otherwise, the maps may be converted into a suitable format before. The maps together with states of the agent may be referred to as "context" of the agent 212 and may be denoted as $x = \left( \left\{ y_j^{(t-T_o:t)} \right\}_{j=1}^{|\mathcal{A}|}, \mathcal{M} \right)$.

Given $x$, a goal is to predict a distribution of the agent's 212 future trajectories $p(y^{(t+\delta t:t+T_h)}|x)$ over a prediction horizon $T_h$, where

$$y^{(t-\delta t:t+T_h)} = \left( y^{(t+\delta t)}, y^{(t+2\delta t)}, \dots, y^{(t+T_h)} \right).$$

A skilled person having benefit from the present disclosure will understand that, to this end, the machine-learning-based model may be trained based on training data comparable to an input for the trajectory prediction, e.g., to the above context of the agent. As a result, the machine-learning-based model may be configured to predict trajectories within the drivable area for the agent. Such machine-learning-based model may be then applied for autonomous driving. In practice, the model may be, e.g., applied in an autonomous or assisted driving system for a vehicle for determining trajectories for the vehicle. In this way, the vehicle can maneuver through traffic scenes using the determined trajectories as input for controlling actuators configured to control the vehicle's movement.

For the trajectory prediction, the context may be rendered upfront. In exemplary embodiments using CoverNet or equivalent networks, a birds-eye-view RGB rendering may be applied to the context. The RGB rendering may be processed by a computer-vision backbone, before concatenated with the agent's current state and processed by another dense layer. In doing so, projection layers of the used network first project the image only and then "add" (concatenate) the agents data with an additional (dense) projection.

An output of the machine-learning-based model may be represented as a set $\mathcal{K}$ of $K$ candidate trajectories $y_k^{(t+\delta t:t+T_h)}$. Doing so reduces the prediction problem to a classification problem, where each trajectory in the set $\mathcal{K}$ is treated as a sample of the predictive distribution $p(y^{(t+\delta t:t+T_h)})$ and (only) a conditional probability ($'y_k^{(t+\delta t:t+T_h)}$ given the input $x$) of the samples may be required to predict a trajectory (for a set time horizon).

In practice, to this end, any space-filling heuristic may be used to define $\mathcal{K}$, for example, by using a dynamical model that integrates physical limitations, which could be applied in combination with the present exemplary embodiment using the PIL approach. Here, it is proposed to apply a definition of a fixed set $\mathcal{K}$ by solving a set-covering problem over a subsample of observed trajectories in the training split, using a greedy-algorithm given a coverage-bound $\varepsilon$, which determines the number of total candidates K.

If the neural network corresponds to or comprises a convolutional neural network (CNN) as backbone, a spectral normalization can be directly applied to its architecture while its last layer may be replaced with a Gaussian process approximated by Fourier features to implement an embodiment of the proposed approach.

As mentioned, the proposed approach may be applied for continual learning for training the machine-learning-based model for different tasks. To this end, in exemplary embodiments, the PIL approach is applied sequentially on two or more consecutive tasks as follows:

In task $i$, it is proposed to integrate prior drivability knowledge, i.e., that trajectories are likely to stay on-road. To this end, it is proposed to use labeled training samples of candidate trajectories, where candidate trajectories in $\mathcal{K}$ with way-points inside the drivable area for a given training scene $x$ are labeled as positive and other candidate trajectories are labeled negative. According to some embodiments, it is proposed to train in a multi-label classification with a binary cross-entropy loss on the labeled training samples. In task $i + 1$, the closest candidate trajectory in $\mathcal{K}$ to an observed ground truth is labeled as positive. The machine-learning-based model is then trained in a multi-class classification with a sparse categorical cross-entropy loss (using softmax normalized logit transformations) on the labeled training samples. In effect, the consecutive tasks differ in the labels and loss functions used.

Applying the proposed method, the machine-learning-based model is first trained on task $i$ and then training on task $i + 1$ is regularized, as exemplified in Fig. 1.

So, the resulting trained machine-learning-based model further considers prior knowledge in contrast to models only trained based on observations.

So, in summary, the present disclosure describes a regularization-based continual learning method but not exclusively for the SNGP model. In embodiments, the proposed method is applied in a PIL approach for trajectory prediction in autonomous driving, deriving a compute efficient informed machine-learning-based model integrating prior drivability knowledge. The proposed approach increases data efficiency and robustness to location-transfers, outperforming informed and non-informed baselines in low data regimes. In particular, the proposed approach allows to learn better weights because informative priors (learned from the knowledge-tasks) already provide some information about good (initial) weights to start learning another task. Thus, the present disclosure shows that the proposed continual learning method is a feasible way to regularize SNGPs using informative priors.

A skilled person having benefit from the present disclosure will appreciate that the proposed approach is not limited to specific machine-learning-based models or specific use cases. So, examples the proposed approach may be found not only in automotive applications but also in robotics, medical applications, and other applications where machine-learning-based models are applied.

Accordingly, the machine-learning-based model, e.g., may be configured to execute any computer vision task. In particular, it may be configured for for trajectory prediction, classification, semantic segmentation, and/or object detection, as outlined above.

Embodiments of the present disclosure not only relate to the proposed continual learning method but also to a machine-learning based model obtainable by the proposed continual learning method. As will be appreciated, such model may be applied in an autonomous or assisted driving system for predicting trajectories for automatically or semi-automatically maneuver the vehicle.

The proposed method and the proposed machine-learning based model, in practice, may be implemented in a respective computer program comprising instructions which, when the computer program is executed by a computer, cause the computer to execute an embodiment of the proposed method and/or model.

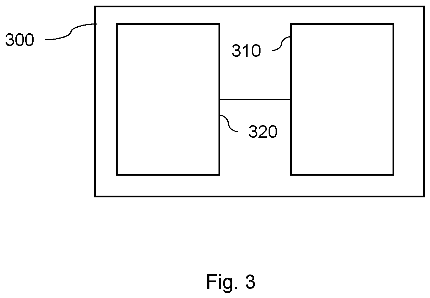

As well, embodiments may provide an apparatus comprising one or more interfaces for communication and a data processing circuit configured to execute an embodiment of the proposed method and/or the proposed mode, as laid out in more detail below with reference to Fig. 3.

Fig. 3 shows a block diagram schematically illustrating an embodiment of such an apparatus 300. The apparatus comprises one or more interfaces 310 for communication and a data processing circuit 320 configured to execute the proposed method.

In embodiments, the one or more interfaces 310 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 320 may correspond to or comprise any type of programable hardware. So, examples of the data processing circuit 320, e.g., comprise a memory, microcontroller, field programable gate arrays, one or more central, and/or graphical processing units. To execute the proposed method, the data processing circuit 320 may be configured to access or retrieve an appropriate computer program for the execution of the proposed method from a memory of the data processing circuit 320 or a separate memory which is communicatively coupled to the data processing circuit 320.

In practice, the proposed apparatus configured to execute the trained model may be installed on a vehicle. So, embodiments may also provide a vehicle comprising the proposed apparatus. In implementations, the apparatus, e.g., is part or a component of an autonomous or assisted driving system (ADS).

In the foregoing description, it can be seen that various features are grouped together in examples for the purpose of streamlining the disclosure. This method of disclosure is not to be interpreted as reflecting an intention that the claimed examples require more features than are expressly recited in each claim. Rather, as the following claims reflect, subject matter may lie in less than all features of a single disclosed example. Thus, the following claims are hereby incorporated into the description, where each claim may stand on its own as a separate example. While each claim may stand on its own as a separate example, it is to be noted that, although a dependent claim may refer in the claims to a specific combination with one or more other claims, other examples may also include a combination of the dependent claim with the subject matter of each other dependent claim or a combination of each feature with other dependent or independent claims. Such combinations are proposed herein unless it is stated that a specific combination is not intended. Furthermore, it is intended to include also features of a claim to any other independent claim even if this claim is not directly made dependent to the independent claim.

Although specific embodiments have been illustrated and described herein, it will be appreciated by those of ordinary skill in the art that a variety of alternate and/or equivalent implementations may be substituted for the specific embodiments shown and described without departing from the scope of the present embodiments. This application is intended to cover any adaptations or variations of the specific embodiments discussed herein. Therefore, it is intended that the embodiments be limited only by the claims and the equivalents thereof.

**Claims**

1. A continual learning method (100) for training a machine-learning based model including a neural network and last-layer kernel approximation, the method (100) comprising:

   obtaining (110) a kernel matrix including uncertainty information for the last-layer kernel approximation; and
   adapting (120) the kernel matrix based on the uncertainty information using regularization-based continual learning.

2. The method (100) of claim 1, wherein the machine-learning based model is trained for a first task based on prior knowledge, and wherein adapting the kernel matrix comprises training the model for a second task based on one or more observations using regularization-based continual learning.

3. The method (100) of claim 2, wherein the first task is to determine one or more trajectories for an agent within a drivable area, and wherein the second task is to select, from the trajectories, a trajectory which is closest to an observed trajectory.

4. The method (100) of any one of the preceding claims, wherein the method (100) further comprises training the neural network using regularization-based continual learning, and wherein the method (100) further comprises applying different temperature parameters for a different regularization strength for the neural network and the last-layer kernel approximation.

5. The method (100) of any one of the preceding claims, wherein the machine-learning based model is configured for a computer vision task.

6. The method (100) of any one of the preceding claims, wherein the machine-learning based model is configured for trajectory prediction, classification, semantic segmentation, and/or object detection.

7. A machine-learning based model obtainable by a method (100) according to any one of the claims 1 to 6.

8. A computer program comprising instructions which, when the computer program is executed by a computer, cause the computer to execute a method (100) of any one of the claims 1 to 6 and/or execute a machine-learning based model according to claim 7.

9. A computer-readable data carrier having stored thereon the computer program of claim 8.

10. An apparatus (300) comprising:

one or more interfaces (310) for communication; and
a data processing circuit (320) configured to execute a method (100) of any one of the claims 1 to 6 and/or a machine-learning based model according to claim 7.

100

| Obtaining a kernel matrix including uncertainty information for the last-layer kernel approximation | 110 |

| Adapting the kernel matrix based on the uncertainty information using regularization-based continual learning | 120 |

Fig. 1

Last-layer kernel approximation

$\pi_{\mathrm{NN},0}$       $\pi_{\mathrm{GP},0}$

Task i: Learning from On-road Trajectories      Multi-label Prediction

210

$x$

Spectral Normalized
Deep Neural Network
$h_{\theta_{\mathrm{NN}}} : \mathcal{X} \to \mathcal{H}$

$h$

Gaussian Process
with Fourier-Feature Kernel
$g_{\theta_{\mathrm{GP}}} : \mathcal{H} \to \mathcal{Y}$

$y$

$\mathcal{K}$

Neural
network

**Regularization**
$\{\lambda_{\mathrm{NN}}, \theta_{\mathrm{NN}}^*, \mathbb{I}\}$

**Regularization**
$\{\lambda_{\mathrm{GP}}, \theta_{\mathrm{GP}}^*, \Sigma_{\mathrm{GP}}\}$

Task i+1: Learning from Observed Trajectories      Multi-class Prediction

$x$

Spectral Normalized
Deep Neural Network
$h_{\theta_{\mathrm{NN}}} : \mathcal{X} \to \mathcal{H}$

$h$

Gaussian Process
with Fourier-Feature Kernel
$g_{\theta_{\mathrm{GP}}} : \mathcal{H} \to \mathcal{Y}$

$y$

214

212

Neural
network

Last-layer
kernel
approximation

Fig. 2

EP 4 586 157 A1

12

300    310    320

Fig. 3

Europäisches
Patentamt

European
Patent Office

Office européen
des brevets

**EUROPEAN SEARCH REPORT**

**Application Number**

EP 24 19 6415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JEREMIAH ZHE LIU ET AL: "Simple and Principled Uncertainty Estimation with Deterministic Deep Learning via Distance Awareness", ARXIV.ORG, CORNELL UNIVERSITY LIBRARY, 201 OLIN LIBRARY CORNELL UNIVERSITY ITHACA, NY 14853, 26 October 2020 (2020-10-26), XP081798889, * the whole document * | 1-10 | INV. G06N20/10 G06N3/09 G06N3/0499  ADD. G06N3/084 |
| Y | SCHLAUCH CHRISTIAN ET AL: "Informed Priors for Knowledge Integration in Trajectory Prediction", 18 September 2023 (2023-09-18), MACHINE LEARNING AND KNOWLEDGE DISCOVERY IN DATABASES: RESEARCH TRACK; [LECTURE NOTES IN COMPUTER SCIENCE; LECT.NOTES COMPUTER], SPRINGER NATURE SWITZERLAND, CHAM, PAGE(S) 392 - 407, XP047670340, ISSN: 0302-9743 ISBN: 978-3-031-43423-5 [retrieved on 2023-09-18] * Sections 3, 4 * | 1-10 | |
| A | HONGJOON AHN ET AL: "Uncertainty-based Continual Learning with Adaptive Regularization", ARXIV.ORG, CORNELL UNIVERSITY LIBRARY, 201 OLIN LIBRARY CORNELL UNIVERSITY ITHACA, NY 14853, 28 May 2019 (2019-05-28), XP081510476, * Sections 1, 3 * | 1-10 | **TECHNICAL FIELDS SEARCHED (IPC)**  G06N |

-/--

The present search report has been drawn up for all claims

| Place of search | Date of completion of the search | Examiner |
|---|---|---|
| The Hague | 10 February 2025 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 19 6415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | CHRISTIAN SCHLAUCH ET AL: "Informed Spectral Normalized Gaussian Processes for Trajectory Prediction", ARXIV.ORG, CORNELL UNIVERSITY LIBRARY, 201 OLIN LIBRARY CORNELL UNIVERSITY ITHACA, NY 14853, 18 March 2024 (2024-03-18), XP091876561, * the whole document * | 1-10 | |

-----

**TECHNICAL FIELDS SEARCHED (IPC)**

The present search report has been drawn up for all claims

| Place of search | Date of completion of the search | Examiner |
|---|---|---|
| The Hague | 10 February 2025 | Efthymiadis, K |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

..........................................................................................
& : member of the same patent family, corresponding
document

EPO FORM 1503 03.82 (P04C01)